# EUROPEAN PATENT APPLICATION

(11) **EP 4 016 421 A1**
(43) Date of publication of application: **22.06.2022**
(21) Application number: 21163704.6
(22) Date of filing: 19.03.2021
(51) Int. Cl.: G06Q 10/08

(54) **ADDRESS MANAGEMENT METHOD, DEVICE, SYSTEM AND COMPUTER DEVICE**

(30) Priority: 15.12.2020 CN 202011490244
(71) Applicant: MDC Telecom Co., Ltd., Beijing 100193 (CN)
(72) Inventor: LI, Zhisheng, Beijing, 100193 (CN)
(74) Representative: Laufhütte, Dieter

(57) **Abstract**

The present invention discloses a an address management method, device and system and a computer device, wherein the method comprises receiving communication information of a user and a universal address code corresponding to the communication information, wherein the universal address code is different from the communication information of the user; associating the communication information with the universal address code corresponding to the communication information; and sending communication information corresponding to the universal address code when receiving a first communication information inquiry request comprising the universal address code sent by an express company terminal, wherein the communication information is used by the express company terminal to determine a delivery site and a delivery route to the delivery site. The present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

## Description

### TECHNICAL FIELD

The present invention relates to the technical field of information security, in particular to an address management method, device, and system and a computer device.

### BACKGROUND

In the current e-commerce shopping and express delivery industry, users need to fill in detailed personal communication information when shopping or mailing packages, including country-province-city-district (county)-street (township)-house number, etc. When buying things on different shopping platforms and mailing packages with different express companies, they need to fill in personal communication information, leading to preservation of the user's personal communication information in many e-commerce platforms, express companies and delivery outlets, causing risk of leakage of personal privacy.

### SUMMARY

Therefore, the technical problem to be solved by the present invention is how to overcome the defect that the delivery information filling method in the prior art causes risk of leakage of personal privacy, thereby providing an address management method, device, system and computer device.

According to a first aspect, an embodiment of the present invention discloses an address management method, which comprises the following steps: receiving communication information of a user and a universal address code corresponding to the communication information, wherein the universal address code is different from the communication information of the user; associating the communication information with the universal address code corresponding to the communication information; and sending communication information corresponding to the universal address code when receiving a first communication information inquiry request comprising the universal address code sent by an express company terminal, wherein the communication information is used by the express company terminal to determine a delivery site and a delivery route to the delivery site.

Optionally, the method further comprises: determining communication address information in the communication information according to the universal address code, when receiving an address code acquisition request containing the universal address code sent by the express company terminal; and determining an address code according to the communication address information and sending the address code to the express company terminal, wherein the address code is used for the express company terminal to determine the delivery site and the delivery route to the delivery site and/or to carry out unmanned delivery.

Optionally, the method further comprises: obtaining the communication information according to the general address code when receiving a second communication information inquiry request comprising the universal address code sent by the express company terminal; and generating a random code corresponding to the communication information and sending the random code to the express company terminal, wherein the random code is used for a courier terminal to acquire the communication information of the user through the random code in the logistics transmission process.

Optionally, the method further comprises: generating different random codes according to the obtained communication information, when receiving the second communication information inquiry request with the same universal address code.

According to a second aspect, an embodiment of the present invention also discloses an address management method, which comprises the following steps: sending a first communication information inquiry request containing a universal address code to an address management terminal, when receiving the universal address code; receiving communication information corresponding to the universal address code sent by the address management terminal; and determining a delivery site and a delivery route to the delivery site according to the communication information.

Optionally, the method further comprises: sending an address code acquisition request containing the universal address code to the address management terminal; and receiving an address code sent by the address management terminal, wherein the address code is used for determining the delivery site and the delivery route to the delivery site and/or carrying out unmanned delivery.

Optionally, the method further comprises: when receiving the universal address code, sending a second communication information inquiry request containing the universal address code to the address management terminal; receiving a random code sent by the address management terminal; and generating a delivery bill according to the random code.

According to a third aspect, an embodiment of the present invention also discloses an address management device, which comprises a first receiving module, configured to receive communication information of a user and a universal address code corresponding to the communication information, wherein the universal address code is different from the communication information of the user; an association module, configured to associate the communication information with the general address code corresponding to the communication information; and a second receiving module, configured to send communication information corresponding to the universal address code when receiving a first communication information inquiry request comprising the universal address code sent by an express company terminal, wherein the communication information is used by the express company terminal to determine a delivery site and a delivery route to the delivery site.

According to a fourth aspect, an embodiment of the present invention also discloses an address management device, which comprises a first sending module, configured to send a first communication information inquiry request containing a universal address code to an address management terminal when receiving the universal address code; a third receiving module, configured to receive communication information corresponding to the universal address code sent by the address management terminal; and a determining module, configured to determine a delivery site and a delivery route to the delivery site according to the communication information.

According to a fifth aspect, an embodiment of the present invention also discloses an address management system, which comprises: a user terminal, configured to send communication information of a user and a universal address code corresponding to the communication information to an address management terminal, wherein the universal address code is different from the communication information of the user; an address management terminal, connected with the user terminal, for executing the steps of the address management method in the first aspect or any optional implementation of the first aspect; an express company terminal, respectively connected with the user terminal and the address management terminal, for executing the steps of the address management method in the second aspect or any optional implementation of the second aspect.

Optionally, the user terminal is further configured to send the universal address code to the express company terminal.

Optionally, the system further comprises a database server, connected with the address management terminal for storing the communication information, the general address code and the address code.

Optionally, the system further comprises a courier terminal, connected with the express company terminal, for acquiring the communication information according to the random code on a delivery bill.

Optionally, the system further comprises: a shopping platform terminal, respectively connected with the express company terminal and the user terminal, for sending the universal address code to the express company terminal when receiving the universal address code sent by the user terminal.

Optionally, the system further comprises: an unmanned delivery terminal, connected with the express company terminal, for performing delivery according to the acquired address code.

According to a sixth aspect, an embodiment of the present invention also discloses a computer device, which comprises: at least one processor; and a memory communicatively connected with the at least one processor; wherein the memory stores instructions executable by the at least one processor, and the instructions are executed by the at least one processor to cause the at least one processor to execute the steps of the address management method in the first aspect or any optional implementation of the first aspect, or in the second aspect or any optional implementation of the second aspect.

According to a seventh aspect, an embodiment of the present invention also discloses a computer-readable storage medium, storing a computer program thereon, the computer program, when executed by a processor, executes the steps of the address management method in the first aspect or any optional implementation of the first aspect, or in the second aspect or any optional implementation of the second aspect.

The technical solution of the present invention has the follow advantages:
1. In the address management method and device provided by the present invention, the communication information of a user and the universal address code corresponding to and different from the communication information are received and the communication information is associated with the universal address code corresponding to the communication information, ,the communication information corresponding to the universal address code is sent when receiving a first communication information inquiry request comprising the universal address code sent by an express company terminal, wherein the communication information is used by the express company terminal to determine a delivery site and a delivery route to the delivery site. In this way, the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.
2. In the address management method and device provided by the present invention, a first communication information inquiry request containing a universal address code is sent to an address management terminal, when receiving the universal address code, and the communication information corresponding to the universal address code sent by the address management terminal is received, and a delivery site and a delivery route to the delivery site are determined according to the communication information. In this way, the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.
3. In the address management system provided by the present invention, the system comprises: a user terminal for sending to the address management terminal communication information of the user and a universal address code corresponding thereto, wherein the universal address code is different from the communication information of the user; an address management terminal, connected with the user terminal, for executing the steps of the address management method; an express company terminal, respectively connected with the user terminal and the address management terminal, for executing the steps of another address management method. In the present invention, the user communication addresses are uniformly managed through the address management terminal, so that when shopping on any e-commerce platform and receiving or sending packages through express companies, users only need to fill in the general address code corresponding to the user communication information instead of filling in user communication information repeatedly, hence the communication information is called from the address management terminal according to the general address code, thereby reducing the filling times of the user communication information, improving the user's experience, while avoiding the exposure of the user communication information to numerous e-commerce platforms and express companies, reducing the risk of leakage of the user communication information.

### BRIEF DESCRIPTION OF THE DRAWINGS

In order to make a clearer description of technical solutions in specific implementations of the present invention or prior art, drawings involved in description for the specific implementations or the prior art will be briefly introduced, and apparently, the drawings described below illustrate some implementations of the present invention, for one with ordinary skill in the art, other drawings can also be obtained in accordance with these drawings without delivering creative efforts
Fig. 1 is a flowchart of a specific example of an address management method applied to an address management terminal in the embodiments of the present invention;
Fig. 2 is a flowchart of another specific example of an address management method applied to an address management terminal in the embodiments of the present invention;
Fig. 3 is a flowchart of a specific example of an address management method applied to an express company in the embodiments of the present invention;
Fig. 4 is a flowchart of another specific example of an address management method applied to an express company in the embodiments of the present invention;
Fig. 5 is a sequence chart of a specific example of an address management method applied to a user terminal, an address management terminal and an express company terminal in the embodiments of the present invention;
Fig. 6 is a schematic block diagram of a specific example of an address management device applied to an address management terminal in the embodiments of the present invention;
Fig. 7 is schematic block diagram of another specific example of an address management device applied to an express company terminal in the embodiments of the present invention;
Fig. 8 is a diagram of a specific example of an address management system in the embodiments of the present invention;
Fig. 9 is a diagram of a specific example of a computer device in an embodiment of the present invention.

### DETAILED DESCRIPTION OF EMBODIMENTS

Technical solutions of the present invention will be described clearly and completely as follows in conjunction with the drawings, apparently, the described embodiments are just part rather than all embodiments of the present invention. Based on the embodiments in the present invention, all other embodiments obtained by one with ordinary skill in the art without delivering creative efforts shall fall into the protection scope of the present invention.

In the description of the present invention, it should be noted that, orientation or position relationships indicated by terms such as "centre", "upper", "lower", "left", "right", "vertical", "horizontal", "inner", "outer", etc. are orientation or position relationships indicated on the basis of the accompanying drawings, are only intended to facilitate description or simplified description of the present invention, rather than indicating or implying that the involved apparatus or element shall have specific orientations, or be configured and operated specifically, and therefore shall not be construed as limitations to the present invention. In addition, terms such as "first", "second", "third", which are merely intended to deliver description, can not be construed as indicating or implying relative importance.

In the description of the present invention, it should be noted that, unless specified and defined otherwise, the terms of "installation", "interconnection" and "connection" shall be understood in a broad sense, for example, a fixed connection, a removable connection, an integral connection, a mechanical connection, an electrical connection, a direct connection, an indirect connection via intermediate medium, or further, internal communication between two elements, a wireless connection, or a wired connection. Case-by-case interpretation can be made to the above terms in the present invention by one with ordinary skill in the art.

In addition, technical features involved in the described different implementations of the present invention can be combined with each other in the case of no contradictions.

### Embodiment 1

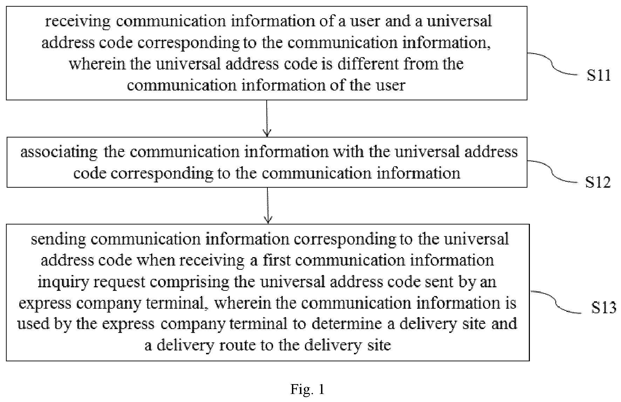

An embodiment of the present invention discloses an address management method which is applied to an address management terminal, as shown in Fig. 1, comprises the following steps:
S11: receiving communication information of a user and a universal address code corresponding to the communication information, wherein the universal address code is different from the communication information of the user.

Illustratively, the communication information includes user personal information and communication address information, wherein the user personal information may include name, gender, contact information, etc., and the format of the communication address information may be set in advance according to the division standard of the national administrative region, such as "country-province-city-district (county)-street-detailed address".

The universal address code can only include numbers or letters, and can also include numbers, letters and special symbols, for example, "abc123@". The universal address code can be in 6 bits or multiple bits. The general address code is used to represent user communication information, which needs to be different from user communication information in order to ensure the security of the user communication information, for example, when the communication information is "No. XX, unit XX, building XX, community XX, street XX, county XX, city XX province XX", the general address code can be "abc123@". Each user may have multiple pieces of communication address information, for example, home address information, company address information or school address information. Therefore, each user may have multiple pieces of communication information, and correspondingly has multiple universal address codes, which are in one-to-one correspondence with communication information.

The embodiments of the present invention does not specifically limit the content of the communication information or the universal address code and the digit of the universal address code, which can be set by the user according to the actual situation.

Communication information and the general address code corresponding to the communication information are sent by the user terminal. Before receiving the communication information and the general address code corresponding to the communication information, the address management method further comprises: receiving registration information of the user.

The registration information can be the user's mobile phone number and user name information, and can also be WeChat account number and WeChat name information. The embodiment of the present invention does not specifically limit the registration information, which can be set by the person skilled in the art according to the actual situation. After successful registration, feedback information can be sent to the user terminal, which is convenient for users to submit their own communication information and the general address code corresponding to the communication information.

S12: associating the communication information with the universal address code corresponding to the communication information.

Exemplarily, the communication information and the universal address codes are in one-to-one correspondence, and associating the communication information with the universal address codes corresponding to the communication information can be performed by firstly associating a communication information filling box with a universal address code filling box, so that the communication information is automatically associated with the universal address code after the user fills in the information; or by associating the communication information sent by the same user terminal and received at the same time with the universal address code. The embodiment of the present invention does not specifically limit the association method, which can be set by those skilled in the art according to the actual situation.

As an optional implementation of the embodiment of the present invention, the address management method further comprises: storing the pair of the associated communication information and general address code in a preset database, facilitating direct calling in subsequent use.

S13: sending communication information corresponding to the universal address code when receiving a first communication information inquiry request comprising the universal address code sent by an express company terminal, wherein the communication information is used by the express company terminal to determine a delivery site and a delivery route to the delivery site.

For example, the first communication information inquiry request may be sent by the express company through a wireless network, and is used to obtain communication information corresponding to the universal address code, so that the express company can determine the delivery site according to the communication address information in the communication information and plan the delivery route to the delivery site according to a third-party map software.

According to the address management method provided by the present invention, the communication information is associated with the general address code corresponding to the communication information by receiving the communication information of the user and the general address code corresponding to the communication information, and the communication information corresponding to the general address code is sent when a first communication information inquiry request containing the general address code sent by an express company terminal is received, wherein the communication information is used by the express company terminal to determine a delivery site and a delivery route to the delivery site, the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

As an optional implementation of the embodiment of the present invention, the address management method further comprises:

firstly, determining communication address information in the communication information according to the universal address code, when receiving an address code acquisition request containing the universal address code sent by the express company terminal.

For example, the address code can be obtained after a third party (for example, the State Post Office) encodes various places in the country, and the address code corresponds to the above places one by one, for example, the address code of "No. XX, unit XX, building XX, community XX, street XX, county XX, city XX province XX" is "diisfueicxbic". The address code can be obtained by purchasing from a third party. After obtaining the address code, it can be stored in the preset database, which is convenient for calling in subsequent use.

The address code acquisition request is sent by the express company through a wireless network. When the address code acquisition request containing the universal address code is received, the communication address information in the communication information is acquired from the preset database according to the universal address code.

Secondly, according to the communication address information, the address code is determined and sent to the express company terminal, and the address code is used by the express company to determine a delivery site and a delivery route to the delivery site and/or carry out unmanned distribution.

For example, determining the address code according to the communication address information may be performed by obtaining the address code corresponding to the communication address information from a preset database according to the communication address information. The address code is sent to the express company through the wireless network, so that the express company can determine the delivery site and the delivery route to the delivery site.

After obtaining the address code, unmanned delivery can be carried out according to the address code. The specific method can be as follows: when a package reaches the delivery site, password information is sent to the user, and the delivery party (such as a drone and unmanned vehicle) performs delivery according to the address code. When the destination is reached, the user terminal can get the package after inputting the password information.

According to the embodiment of the present invention, by obtaining the address code, it is convenient for the express company terminal to determine the delivery site and the delivery route to the delivery site according to the address code, so that the processing is easier; the delivery party carries out unmanned delivery according to the address code, without exposing the user communication address information in the logistics transportation process, thus improving the security of user communication information.

### Embodiment 2

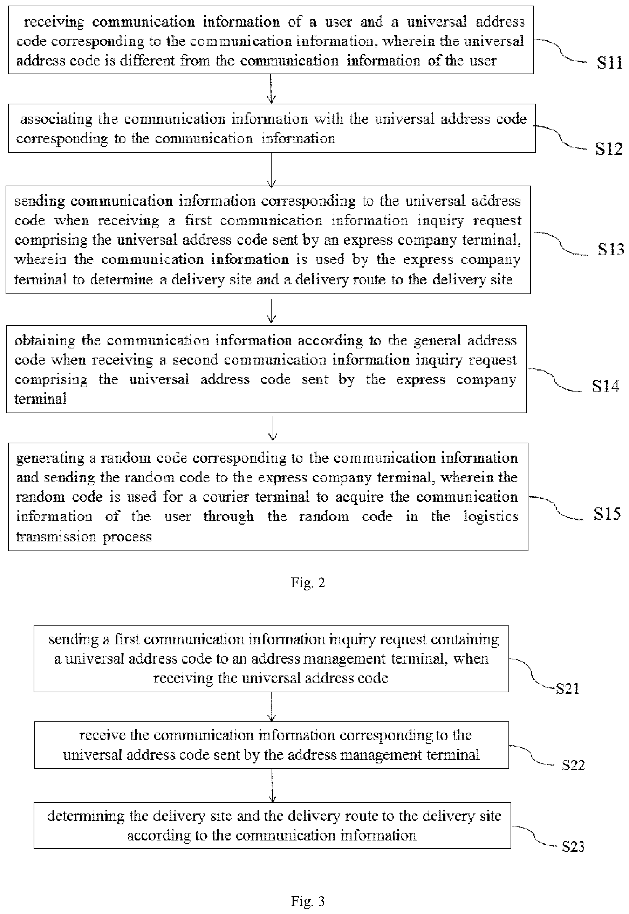

An embodiment of the present invention discloses an address management method, which is applied to an address management terminal, as shown in Fig. 2, comprising the following steps:
S11: receive the user's communication information and the general address code corresponding to the communication information, which is different from the user's communication information.
S12: associating the communication information with the universal address code corresponding to the communication information.
S13: sending communication information corresponding to the universal address code when receiving a first communication information inquiry request comprising the universal address code sent by an express company terminal, wherein the communication information is used by the express company terminal to determine a delivery site and a delivery route to the delivery site.

The specific implementation can be found in the related descriptions of steps S11-S13 in the above embodiment 1, and will not be repeated herein.

S14: obtaining the communication information according to the general address code when receiving a second communication information inquiry request comprising the universal address code sent by the express company terminal.

For example, the second communication information inquiry request may be sent by the express company through a wireless network, and is used to obtain a random code corresponding to the communication information, so that the express company terminal can generate an express bill according to the random code. And when receiving the second communication information inquiry request containing the universal address code, communication information corresponding to the universal address code is acquired from a preset database according to the universal address code.

S15: generating a random code corresponding to the communication information and sending the random code to the express company terminal, wherein the random code is used for a courier terminal to acquire the communication information of the user through the random code in the logistics transmission process.

For example, the random code can be a bar code or a two-dimensional code. The random code is not specifically limited in the embodiment of the present invention, but can be set by a person skilled in the art according to the actual situation. The method of generating a two-dimensional code or a bar code belongs to the prior art, and will not be repeated here. Random code is used to obtain user's communication information through a random code in the process of logistics transmission, that is, in the process of logistics transmission, user's communication information is not directly displayed, but is obtained by an authorized courier terminal according to random code.

According to an embodiment of the present invention, the random code is printed on the express bill for logistics transmission, so that the user communication information is no longer exposed to numerous express companies and delivery sites, and the risk of user communication information leakage is further reduced.

As an optional implementation of the embodiment of the present invention, the address management method further comprises:
Firstly, determining communication address information in the communication information according to the universal address code, when receiving an address code acquisition request containing the universal address code sent by the express company terminal.
Secondly, determining an address code according to the communication address information and sending the address code to the express company terminal, wherein the address code is used for the express company terminal to determine the delivery site and the delivery route to the delivery site and/or to carry out unmanned delivery.

For example, after obtaining the address code, unmanned delivery can be performed according to the address code, or manual delivery can be performed according to the random code. The specific delivery method can be found in the description of the relevant steps and step S15 of the above embodiment 1, and will not be repeated herein.

As an optional implementation of the embodiment of the present invention, the address management method further comprises:
generating different random codes according to the obtained communication information, when receiving the second communication information inquiry request of the same universal address code.

For example, when receiving the second communication information inquiry request of the same universal address code, different random codes are generated according to the obtained communication information, that is, for the second communication information inquiry request of the same universal address code, the generated random codes are different each time, which ensures that different random codes are used every time for transportation, avoids the insecurity problem of user communication information caused by using the same random code all the time, and further ensures the security of user communication information.

### Embodiment 3

An embodiment of the present invention also discloses an address management method, which is applied to the express company terminal, as shown in Fig. 3, comprising the following steps:
S21: sending a first communication information inquiry request containing a universal address code to an address management terminal, when receiving the universal address code.

For example, the universal address code can be sent by a user terminal through a wireless network (for example, when a user sends a package), or by a shopping platform terminal through a wireless network (for example, when a user purchases goods on the shopping platform). The embodiment of the present invention does not specifically limit the sender of the universal address code, which can be set by a person skilled in the art according to actual conditions. The first communication information inquiry request is also sent through the wireless network.

S22: receive the communication information corresponding to the universal address code sent by the address management terminal. The specific implementation can be found in the description of step S12 in the above embodiment 1, and will not be repeated herein.

S23: determining the delivery site and the delivery route to the delivery site according to the communication information. The specific implementation can be found in the description of step S12 in the above embodiment 1, and will not be repeated here.

According to the address management method provided by the present invention, when the universal address code is received, a first communication information inquiry request containing the universal address code is sent to the address management terminal, communication information corresponding to the universal address code sent by the address management terminal is received, and delivery sites and delivery routes to the delivery sites are determined according to the communication information, the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

As an optional implementation of the embodiment of the present invention, the address management method further comprises:
firstly, sending an address code acquisition request containing a universal address code to the address management terminal,
secondly, receiving an address code sent by the address management terminal, wherein the address code is used for determining the delivery site and the delivery route to the delivery site and/or carrying out unmanned delivery.

The detailed implementation can be found in the description of the corresponding steps in embodiment 1 above, and will not be repeated herein.

### Embodiment 4

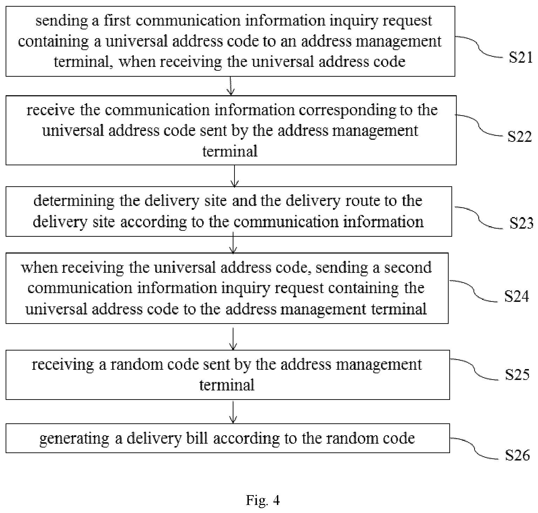

An embodiment of the present invention also discloses an address management method, which is applied to the express company terminal, as shown in Fig. 4, comprising the following steps:
S21: sending a first communication information inquiry request containing a universal address code to an address management terminal, when receiving the universal address code.
S22: receiving the communication information corresponding to the universal address code sent by the address management terminal.
S23: determining a delivery site and a delivery route to the delivery site according to the communication information.

The specific implementation can be found in the description of steps S21-S23 in the above embodiment 3 and will not be repeated herein.

S24: when receiving the universal address code, sending a second communication information inquiry request containing the universal address code to the address management terminal. The specific implementation can be found in the description of Step S21 in embodiment 3 above and will not be repeated herein.

S25: receiving a random code sent by the address management terminal. The specific implementation can be found in the description of Step S15 in embodiment 2 above and will not be repeated herein.

S26: generating a delivery bill according to the random code.

For example, generating a delivery bill according to the random code can be performed by obtaining an initial delivery bill from a preset database, and the random code is pasted to a preset position of the initial delivery bill to generate a delivery bill for logistics transmission.

According to the embodiment of the present invention, the random code is printed on the express delivery bill for logistics transmission, so that the user communication information is no longer exposed to numerous express companies and delivery sites, and the risk of user communication information leakage is further reduced.

### Embodiment 5

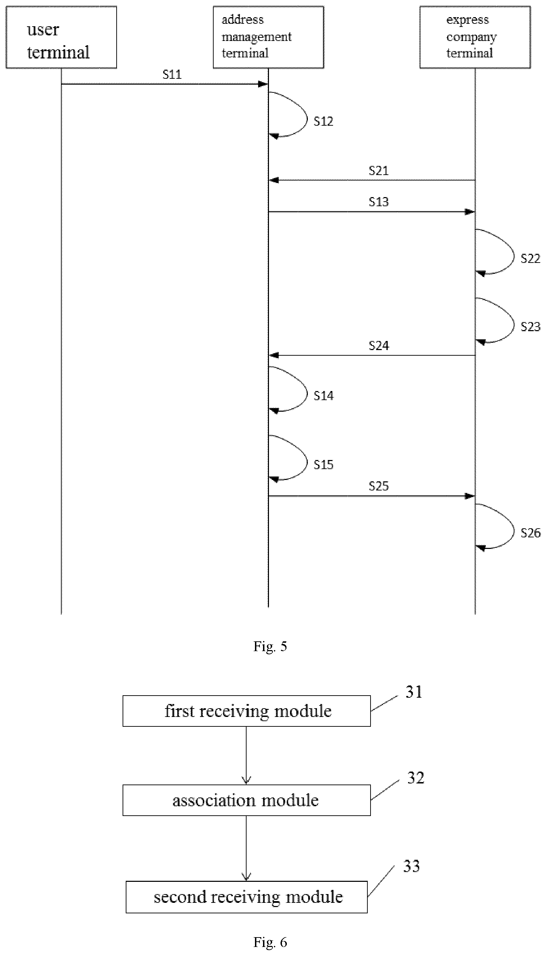

An embodiment of the present invention discloses an address management method, which is applied to the interactive system of a user terminal, an address management terminal and an express company terminal. The reference numerals in the figure correspond to the reference numerals in the above embodiment, as shown in Fig. 5, including:
S11: receiving, by an address management terminal, communication information of a user and a universal address code corresponding to the communication information sent by a user terminal, wherein the universal address code is different from the communication information of the user.
S12: associating, by the address management terminal, the communication information with the general address code corresponding to the communication information.
S21: when receiving the universal address code, the express company terminal sends a first communication information inquiry request containing the universal address code to the address management terminal.
S13: when receiving the first communication information inquiry request containing the universal address code sent by the express company terminal, the address management terminal sends communication information corresponding to the universal address code, wherein the communication information is used by the express company terminal to determine a delivery site and a delivery route to the delivery site.
S22: receiving, by the express company terminal, the communication information corresponding to the universal address code.
S23: determining, by the express company terminal, the delivery site and the delivery route to the delivery site according to the communication information.
S24: when receiving the universal address code, the express company terminal sends a second communication information inquiry request containing the universal address code.
S14: obtaining, by the address management terminal, the communication information according to the universal address code, when receiving the second communication information inquiry request containing the universal address code sent by the express company terminal.
S15: generating and sending, by the address management terminal, a random code corresponding to the communication information to the express company terminal, wherein the random code is used for the courier terminal to obtain the communication information of the user through the random code in the logistics transmission process.
S25: receiving, by the express company, the random code sent by the address management terminal.
S26: generating, by the express company, a delivery bill according to the random code.

The description of each step in this embodiment can be found in the above embodiments 1-4, and will not be repeated herein. According to the present invention, the communication addresses of users are uniformly managed through the address management terminal, ensuring that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

### Embodiment 6.

The embodiment of the present invention also discloses an address management device, which is applied to the address management terminal, as shown in Fig. 6, comprising:
a first receiving module 31, configured to receive communication information of a user and a universal address code corresponding to the communication information, wherein the universal address code is different from the communication information of the user; the specific implementation can be found in the description about step S11 of embodiment 1 above, and will not be repeated herein;
an association module 32, configured to associate the communication information with the general address code corresponding to the communication information, the specific implementation can be found in the related description of step S12 in the above embodiment 1, and will not be repeated herein; and
a second receiving module 33, configured to send communication information corresponding to the universal address code when receiving a first communication information inquiry request comprising the universal address code sent by an express company terminal, wherein the communication information is used by the express company terminal to determine a delivery site and a delivery route to the delivery site; the specific implementation can be found in the related description of step S13 in the above embodiment 1, and will not be repeated herein.

As an optional implementation of the embodiment of the present invention, the address management device further includes:
a first communication information inquiry request receiving module, configured to obtain communication information according to the universal address code when receiving a second communication information inquiry request including the universal address code sent by the express company terminal; the specific implementation can be found in the related description of step S14 in the above embodiment 1, and will not be repeated herein;
a first generating module, configured to generate a random code corresponding to communication information and send it to the express company, wherein the random code is used for the courier terminal to obtain the communication information of the user through the random code in the logistics transmission process; the specific implementation can be found in the related description of step S15 in the above embodiment 1, and will not be repeated herein.

According to the address management device provided by the present invention, the communication information is associated with the universal address code corresponding to the communication information by receiving the communication information of a user and the universal address code corresponding to but different from the communication information, and communication information corresponding to the universal address code is sent when receiving a first communication information inquiry request containing the universal address code sent by an express company terminal, the communication information is used for the express company to determine a delivery site and a delivery route to the delivery site, the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

As an optional implementation of the embodiment of the present invention, the address management device further includes:
a first determining module, configured to determine the communication address information in the communication information according to the universal address code when receiving the address code acquisition request including the universal address code sent by the express company terminal; the specific implementation can be found in the relevant description of the corresponding steps in embodiment 1 above, and will not be repeated herein; and
a second sending module, configured to determine the address code according to the communication address information and sending the address code to the express company terminal, the address code is used by the express company to determine the delivery site and the delivery route to the delivery site and/or to carry out unmanned delivery; the specific implementation can be found in the relevant description of the corresponding steps in embodiment 1 above, and will not be repeated herein.

As an optional implementation of the embodiment of the present invention, the address management device further includes:
a first generating sub-module, configured to generate different random codes according to the obtained communication information when receiving the second communication information inquiry request of the same universal address code. The specific implementation can be found the relevant description of the corresponding steps in embodiment 1 above, and will not be repeated herein.

### Embodiment 7

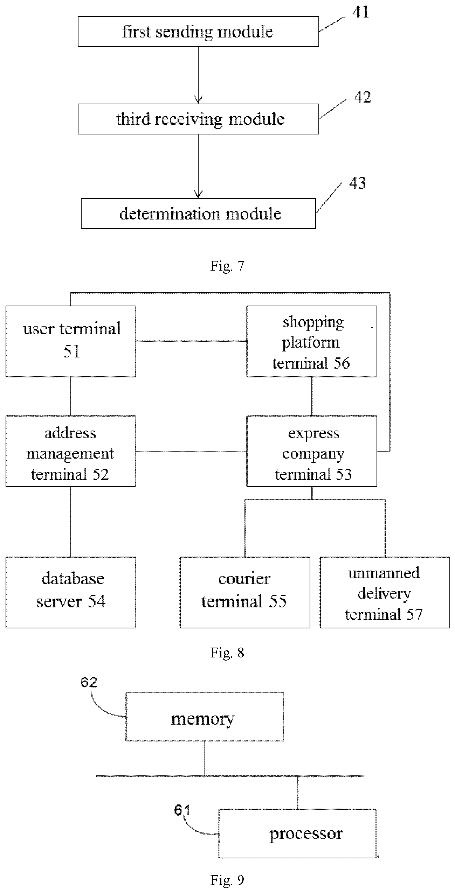

An embodiment of the present invention also discloses an address management device, which is applied to the express company terminal, as shown in Fig. 7, including:
a first sending module 41, configured to send a first communication information inquiry request containing the universal address code to the address management terminal when receiving the universal address code; the specific implementation can be found the related description of step S21 in embodiment 3 above, which will not be repeated here;
a third receiving module 42, configured to receive the communication information corresponding to the universal address code sent by the address management terminal; the specific implementation can be found in the related description of step S22 in embodiment 3 above, and will not be repeated herein; and
a determination module 43, configured to determine the delivery site and the delivery route to the delivery site according to the communication information; the specific implementation can be found in the description of step S23 in embodiment 3 above, and will not be repeated herein.

According to the address management device provided by the present invention, when receiving the universal address code, a first communication information inquiry request containing the universal address code is sent to the address management terminal, communication information corresponding to the universal address code sent by the address management terminal is received, and delivery sites and delivery routes to the delivery sites are determined according to the communication information, thus the present invention ensures that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

As an optional implementation of the embodiment of the present invention, the address management device further comprises:
a second communication information inquiry request sending module, configured to send a second communication information inquiry request containing the universal address code to the address management terminal, when receiving the universal address code; the specific implementation can be found in the related description of step S24 in the above embodiment 3, and will not be repeated herein;
a fourth receiving module, configured to receive the random code sent by the address management terminal; the specific implementation can be found in the related description of step S25 in the above embodiment 3, and will not be repeated herein; and
a second generating module 43, configured to generate a delivery bill according to the random code; the specific implementation can be found in the related description of step S26 in the above embodiment 3, and will not be repeated herein.

As an optional implementation of the embodiment of the present invention, the address management device further comprises:
an address code acquisition request sending module, configured to send an address code acquisition request containing the universal address code to an address management terminal; the specific implementation can found the relevant description of the corresponding steps in embodiment 3 above, and will not be repeated herein;
a fifth receiving module, configured to receive the address code sent by the address management terminal, wherein the address code is used to determine a delivery site and a delivery route to the delivery site and/or carry out unmanned delivery; the specific implementation can be found in the relevant description of the corresponding steps in embodiment 3 above, and will not be repeated herein.

### Embodiment 8

The embodiment of the present invention also discloses an address management system, as shown in Fig. 8, comprising:
a user terminal 51, configured to send the communication information of the user and a universal address code corresponding to the communication information to the address management terminal 52, wherein the universal address code is different from the communication information of the user,
for example, the user terminal 51 may be a mobile phone terminal or a computer terminal, and information is sent to the address management terminal 52 and the express company terminal 53 by using the address management terminal APP or applet or 5G message of the user terminal 51;
an address management terminal 52, connected with the user terminal 51, and configured to execute the steps of the address management method in embodiment 1 or 2 of the address management method applied to the address management terminal; and
an express company terminal 53, connected with the user terminal 51 and the address management terminal 52 respectively, and used to execute the steps of the address management method in embodiment 3 or 4 of the address management method applied to the express company terminal.

The address management system provided by the present invention comprises a user terminal, configured to send communication information of a user and a universal address code corresponding to the communication information to an address management terminal, and to send the universal address code to the express company terminal, wherein the universal address code is different from the communication information of the user; an address management terminal, connected with the user terminal, for executing the steps of the address management method; an express company terminal, respectively connected with the user terminal and the address management terminal, for executing the steps of another address management method. According to the present invention, the user communication addresses are uniformly managed through the address management terminal, ensuring that when shopping on any e-commerce platform and receiving or sending packages through express companies, users only need to fill in the general address code corresponding to the user communication information instead of filling in user communication information repeatedly, thus reducing the filling times of user communication information, improving user's experience, while avoiding the exposure of user communication information to numerous e-commerce platforms, thus reducing the risk of leakage of user communication information.

As an optional implementation of the embodiment of the present invention, the user terminal is further configured to send the universal address code to the express company terminal.

As an optional implementation of the embodiment of the present invention, the address management system further includes:
a database server 54, connected to the address management terminal 52, for storing communication information, general address codes and address codes; the specific implementation can be found in the relevant description of the corresponding steps in embodiment 1 above, and will not be repeated herein.

As an optional implementation of the embodiment of the present invention, the address management system further includes:
a courier terminal 55, connected with the express company terminal 53, for obtaining communication information according to the random code on the delivery bill; the specific implementation can be found in the relevant description of the corresponding steps in embodiment 1 above, and will not be repeated here.

As an optional implementation of the embodiment of the present invention, the address management system further includes:
a shopping platform terminal, connected with the express company terminal 53 and the user terminal 51, and is used to send the universal address code to the express company terminal 53 when receiving the universal address code sent by the user terminal 51; the specific implementation can be found in the relevant description of the corresponding steps in embodiment 1 above, and will not be repeated herein.

As an optional implementation of the embodiment of the present invention, the address management system further includes:
an unmanned delivery terminal 57, connected with the express company terminal 53, and is configured to perform delivery according to the acquired address code.

For example, the unmanned delivery terminal can be a drone or an unmanned vehicle. The embodiment of the present invention does not specifically limit the unmanned delivery terminal, which can be set by the person skilled in the art according to the actual situation; the specific delivery method can be found in the relevant description of the corresponding steps in the above embodiment 1, and will not be repeated herein.

### Embodiment 9

An embodiment of the present invention also provides a computer device, as shown in Fig. 9, which may include a processor 61 and a memory 62, which may be connected through a bus or other means, and the connection through a bus is taken as an example in Fig. 9.

The processor 61 may be a Central·Processing·Unit (CPU), or other general-purpose processors, Digital·Signal·Processor (DSP), an Application Specific Integrated Circuit (ASIC), a Field-Programmable Gate Array (FPGA), or other programmable logic devices, discrete gates or transistor logic devices, discrete hardware components and other chips, or combinations of the above chips.

As a non-transient computer readable storage medium, the memory 62 can be used to store non-transient software programs, non-transient computer executable programs and modules, such as program instructions/modules corresponding to the address management method in the embodiment of the present invention (for example, the first receiving module 31, the association module 32 and the second receiving module 33 shown in Fig. 6 or the first sending module 41, the third receiving module 42 and the determining module 43 shown in Fig. 7). The processor 61 executes various functional applications and data processing of the processor by running non-transient software programs, instructions and modules stored in the memory 62, that is, realizes the address management method in the above method embodiment.

The memory 62 may include a storage program area and a storage data area, wherein the storage program area may store an application program required by an operating system and at least one function; the storage data area may store data created by the processor 61 and the like. In addition, the memory 62 may include a high-speed random access memory, and may also include a non-transient memory, such as at least one disk memory device, a flash memory device, or other non-transient solid-state memory devices. In some embodiments, the memory 62 may optionally include memories remotely located relative to the processor 61, and these remote memories may be connected to the processor 61 through a network. Examples of the above networks include, but are not limited to, the Internet, intranet, local area network, mobile communication network and combinations thereof.

The one or more modules are stored in the memory 62, and when executed by the processor 61, the address management method in the embodiment shown in Figs. 1-4 is executed.

The specific details of the above computer device can be understood by referring to the corresponding descriptions and effects in the embodiments shown in Figs. 1 to 4, and will not be repeated herein.

It can be understood by those skilled in the art that all or part of the processes in the methods of the above embodiments can be completed by instructing related hardware through a computer program, which can be stored in a computer-readable storage medium, and when the program is executed, it can include the processes of the embodiments of the above methods. The storage medium can be magnetic disk, optical disk, Read-Only·Memory (ROM), Random Access Memory (RAM), Flash memory, Memory), Hard·Disk·Drive (HDD) or Solid-State Drive, SSD); and the storage medium may also include a combination of the above kinds of memories.

It should be understood by those skilled in the art that embodiments of the present invention may be provided as methods, systems, or computer program products. Therefore, the present invention may take the form of an entirely hardware embodiment, an entirely software embodiment, or an embodiment combining software and hardware aspects. Furthermore, the present invention may take the form of a computer program product that can be implemented on one or more computer usable storage media (including but not limited to disk memory, CD-ROM, optical memory, etc.) having computer usable program code embodied therein.

The present invention is described with reference to flowcharts and/or block diagrams of methods, devices (systems), and computer program products according to embodiments of the present invention. It should be understood that each flow and/or block in the flowchart and/or block diagram, and combinations of flows and/or blocks in the flowchart and/or block diagram can be implemented by computer program instructions. These computer program instructions may be provided to a processor of a general purpose computer, a special purpose computer, an embedded processor or other programmable data processing apparatus to produce a machine, such that the instructions which are executed by the processor of the computer or other programmable data processing apparatus produce means for implementing the functions specified in one or more processes of the flow diagrams and/or one or more blocks of the block diagrams.

These computer program instructions may also be stored in a computer-readable memory that can direct a computer or other programmable data processing apparatus to operate in a specific manner, such that the instructions stored in the computer-readable memory produce an article of manufacture including the instruction means which implements the functions specified in one or more processes of the flow diagrams and/or one or more blocks of the block diagrams.

These computer program instructions may also be loaded onto a computer or other programmable data processing device, such that a series of operational steps are performed on the computer or other programmable device to produce a computer-implemented process, such that the instructions which are executed on the computer or other programmable device provide steps for implementing the functions specified in one or more processes of the flow diagrams and/or one or more blocks of the block diagrams.

Although embodiments of the present invention have been described with reference to the accompanying drawings, various modifications and variations can be made by those skilled in the art without departing from the spirit and scope of the present invention, and such modifications and variations shall fall within the scope defined by the appended claims.

## Claims

1. An address management method, **characterized in** comprising the following steps:
receiving communication information of a user and a universal address code corresponding to the communication information, wherein the universal address code is different from the communication information of the user;
associating the communication information with the universal address code corresponding to the communication information; and
sending communication information corresponding to the universal address code when receiving a first communication information inquiry request comprising the universal address code sent by an express company terminal, wherein the communication information is used by the express company terminal to determine a delivery site and a delivery route to the delivery site.

2. The method according to claim 1, **characterized in** further comprising:
determining communication address information in the communication information according to the universal address code, when receiving an address code acquisition request containing the universal address code sent by the express company terminal; and
determining an address code according to the communication address information and sending the address code to the express company terminal, wherein the address code is used for the express company terminal to determine the delivery site and the delivery route to the delivery site and/or to carry out unmanned delivery.

3. The method according to claim 1 or 2, **characterized in** further comprising:
obtaining the communication information according to the general address code when receiving a second communication information inquiry request comprising the universal address code sent by the express company terminal; and
generating a random code corresponding to the communication information and sending the random code to the express company terminal, wherein the random code is used for a courier terminal to acquire the communication information of the user through the random code in the logistics transmission process.

4. The method according to claim 3, **characterized in** further comprising:
generating different random codes according to the obtained communication information, when receiving the second communication information inquiry request with the same universal address code.

5. An address management method, **characterized in** comprising the following steps:
sending a first communication information inquiry request containing a universal address code to an address management terminal, when receiving the universal address code;
receiving communication information corresponding to the universal address code sent by the address management terminal; and
determining a delivery site and a delivery route to the delivery site according to the communication information.

6. The method according to claim 5, **characterized in** further comprising:
sending an address code acquisition request containing the universal address code to the address management terminal; and
receiving an address code sent by the address management terminal, wherein the address code is used for determining the delivery site and the delivery route to the delivery site and/or carrying out unmanned delivery.

7. The method according to claim 5 or 6, **characterized in** further comprising:
when receiving the universal address code, sending a second communication information inquiry request containing the universal address code to the address management terminal;
receiving a random code sent by the address management terminal; and
generating a delivery bill according to the random code.

8. An address management device, **characterized in** comprising:
a first receiving module, configured to receive communication information of a user and a universal address code corresponding to the communication information, wherein the universal address code is different from the communication information of the user;
an association module, configured to associate the communication information with the general address code corresponding to the communication information; and
a second receiving module, configured to send communication information corresponding to the universal address code when receiving a first communication information inquiry request comprising the universal address code sent by an express company terminal, wherein the communication information is used by the express company terminal to determine a delivery site and a delivery route to the delivery site.

9. An address management device, **characterized in** comprising:
a first sending module, configured to send a first communication information inquiry request containing a universal address code to an address management terminal when receiving the universal address code;
a third receiving module, configured to receive communication information corresponding to the universal address code sent by the address management terminal; and
a determining module, configured to determine a delivery site and a delivery route to the delivery site according to the communication information.

10. An address management system, **characterized in** comprising:
a user terminal, configured to send communication information of a user and a universal address code corresponding to the communication information to an address management terminal, wherein the universal address code is different from the communication information of the user;
an address management terminal, connected with the user terminal, for executing the steps of the address management method according to any one of claims 1-4;
an express company terminal, respectively connected with the user terminal and the address management terminal, for executing the steps of the address management method according to any one of claims 5-7.

11. The system according to claim 10, **characterized in that** the user terminal is further configured to send the universal address code to the express company terminal; and/or
the system further comprises: a shopping platform terminal, respectively connected with the express company terminal and the user terminal, for sending the universal address code to the express company terminal when receiving the universal address code sent by the user terminal.

12. The system according to claim 10, **characterized in** further comprising:
a database server, connected with the address management terminal and configured to store the communication information, the general address code and the address code.

13. The system according to claim 10, **characterized in** further comprising:
a courier terminal, connected with the express company terminal, for acquiring the communication information according to the random code on a delivery bill; and/or
an unmanned delivery terminal, connected with the express company terminal, for performing delivery according to the acquired address code.

14. A computer device, **characterized in** comprising: at least one processor; and a memory communicatively connected with the at least one processor; wherein the memory stores instructions executable by the at least one processor, and the instructions are executed by the at least one processor to cause the at least one processor to execute the steps of the address management method according to any one of claims 1-4 or 5-7.

15. A computer-readable storage medium, storing a computer program thereon, **characterized in that**, the computer program, when executed by a processor, executes the steps of the address management method according to any one of claims 1-4 or 5-7.
